# EUROPEAN PATENT APPLICATION

(11) **EP 4 811 241 A1**
(43) Date of publication of application: **23.09.2026**
(21) Application number: 25165106.3
(22) Date of filing: 20.03.2025
(51) Int. Cl.: G06Q 10/08

(54) **A COMPUTER-IMPLEMENTED METHOD**

(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO); JAKOBSEN, Jonas Neraal, 5578 Nedre Vats (NO)
(74) Representative: Kilburn & Strode LLP

(57) **Abstract**

The disclosure relates to a computer-implemented method of simulating modifications in a real automated storage and retrieval system. The method comprises providing a virtual automated storage and retrieval system, the virtual automated storage and retrieval system being a digital twin of a real automated storage and retrieval system; providing a virtual software stack for controlling the virtual automated storage and retrieval system, the virtual software stack being a digital twin (e.g., a software clone or virtual instance) of a real software stack for controlling the real automated storage and retrieval system; modifying the virtual automated storage and retrieval system and/or the virtual software stack; receiving, by the virtual software stack, order data; applying, by the virtual software stack, the order data to the virtual automated storage and retrieval system; and comparing performance of the real automated storage and retrieval system with performance of the virtual automated storage and retrieval system based on responses of the real automated storage and retrieval system and the virtual automated storage and retrieval system to the order data.

## Description

### TECHNICAL FIELD

The disclosure relates to a computer-implemented method. More particularly, it relates to a computer-implemented method of simulating modifications to a real automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Typically, storage system manufacture involves designing the arrangement of the storage system before building the storage system at a warehouse. Designing the storage system may be carried out by a designer on paper or using computer-aided design (CAD) software. For instance, the designer may use a specification of the warehouse to create a CAD schematic of a storage system for the warehouse. The storage system can then be built according to the CAD schematic. The design stage may also include some simulations of the proposed storage system, but this may not accurately describe how the storage system will operate when it is built.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a schematic diagram of a software environment for handling operations within a warehouse;
Fig. 6 is a schematic diagram of a system according to an implementation of the present disclosure; and
Fig. 7 is a flow diagram showing a method according to an implementation of the present disclosure.

### DETAILED DESCRIPTION

At its most general, the disclosure relates to a computer-implemented method of simulating modifications to a real automated storage and retrieval system. The method comprises providing a digital twin of the real automated storage and retrieval system, including a digital twin of the hardware of the real automated storage and retrieval system as well as of a real software stack which controls the real automated storage and retrieval system (e.g., a digital twin of the real software stack in the form of a software clone or virtual instance), and modifying the digital twin. Order data (e.g., real order data which is used in the real automated storage and retrieval system to fulfil customer orders) is applied to the digital twin, and performance of the digital twin is compared with the performance of the real system. This allows the effect of the modifications to be assessed using real order data, allowing comparisons with the true operation of the real automated storage and retrieval system to be made. If the modifications (e.g., modifications to any attribute of the virtual hardware and/or the virtual software) are beneficial, these can be implemented in the real system to improve performance (e.g., increase the number of orders which are able to be fulfilled in a given time, improve utilization of the available storage space etc.).

Provided herein is a computer-implemented method of simulating modifications to a real automated storage and retrieval system. The method comprises: providing a virtual automated storage and retrieval system, the virtual automated storage and retrieval system being a digital twin of a real automated storage and retrieval system; providing a virtual software stack for controlling the virtual automated storage and retrieval system, the virtual software stack being a digital twin (e.g., a software clone or a virtual instance) of a real software stack for controlling the real automated storage and retrieval system; modifying the virtual automated storage and retrieval system and/or the virtual software stack (e.g., modifying any hardware and/or software parameter thereof); receiving, by the virtual software stack, order data (e.g., including real customer order data); applying, by the virtual software stack, the order data to the virtual automated storage and retrieval system; and comparing performance of the real automated storage and retrieval system with performance of the virtual automated storage and retrieval system based on responses of the real automated storage and retrieval system and the virtual automated storage and retrieval system to the order data. For example, the performance of an automated storage and retrieval system may be based on order fulfilment times, an order backlog, a number of orders which are completed in a given time period, or any other suitable measurable parameter (such as power consumption, or utilization of the available storage space). The method thereby allows modifications to a real system (including hardware and/or software components of the system) to be simulated based on real order data, and assessed relative to the performance of the real system. If the modifications result in a positive improvement, then these changes may be implemented in the real system.

Optionally, modifying the virtual automated storage and retrieval system may comprise modifying virtual components of the virtual automated storage and retrieval system. For example, the virtual components may correspond with hardware components of the real automated storage and retrieval system. The virtual components may comprise any one or more of: a virtual vehicle (e.g., a container handling vehicle, a service vehicle); a virtual storage container; a virtual static mechanical handling system (e.g., a robotic arm) for moving one or more than one virtual storage container or virtual contents from a first location in the virtual automated storage and retrieval system to a second location in the virtual automated storage and retrieval system; a virtual picking and/or packing station for adding and/or removing virtual contents from a virtual storage container; a virtual storage column; and a virtual port column. The modifications to the virtual components may comprise modifying their performance or operating parameters, and/or may include modifying the number, type, or size of the virtual component, and the nature of the modifications which are suitable is dependent upon the virtual component.

Optionally, modifying the virtual software stack may comprise modifying logic controlling how commands to be executed by the virtual automated storage and retrieval system are generated from order data. For example, the logic may define how vehicles move, in what order vehicles visit different storage and/or port columns, the order in which orders are executed, or any other variable logic. Modifying the virtual software stack may also comprise modifying the rate at which instructions relating to the execution of orders are sent to the virtual automated storage and retrieval system, for example. This may be used to assess performance of the virtual automated storage and retrieval system during periods of high or low order volume, and determine which software and/or hardware modifications are suitable during such periods.

Optionally, the method may comprise modifying the order data. For example, the rate at which order data is received by the virtual software stack may be modified to assess performance of the virtual software stack during periods of high or low order volume, and determine which software and/or hardware modifications are suitable during such periods. Order data may also be modified by removing some orders, or adding simulated orders, or in any other suitable manner, for example. Optionally, modifying the order data may comprise modifying a rate of applying order data to the virtual automated storage and retrieval system.

Optionally, the method may comprise a step of calibrating the virtual automated storage and retrieval system and/or the virtual software stack. For example, this may comprise receiving calibration data from the real automated storage and retrieval system and/or the real software stack. This ensures that the virtual automated storage and retrieval system and/or the virtual software stack is maintained as an accurate digital twin of the real automated storage and retrieval system and/or real software stack. For example, the calibration data may comprise tracking data relating to movement of containers and vehicles about the real automated storage and retrieval system (for example, the speed of vehicle movement, position information showing where vehicles are positioned on a rail system of the real automated storage and retrieval system, position information showing where containers are stored within the real automated storage and retrieval system etc.). Any suitable data may be exchanged between the real system and the virtual system for this purpose.

Optionally, providing a virtual automated storage and retrieval system may comprise providing a plurality of virtual automated storage and retrieval systems, each virtual automated storage and retrieval system being a digital twin of the same real automated storage and retrieval system. Similarly, providing a virtual software stack for controlling the virtual automated storage and retrieval system may comprise providing a respective virtual software stack for each of the plurality of virtual automated storage and retrieval systems. In such examples, modifying the simulated automated storage and retrieval system can comprise modifying each of the plurality of simulated automated storage and retrieval systems and/or each of the respective virtual software stacks differently, and comparing performance of the real automated storage and retrieval system with performance of the modified simulated automated storage and retrieval system may comprise comparing the performance of each of the plurality of automated storage and retrieval systems with each other. That is, the method may provide a plurality of virtual automated storage and retrieval systems and/or a plurality of virtual software stacks, allowing a plurality of hardware and/or software modifications to be simulated and compared with one another and/or with the real system.

Optionally, the method may further comprise selecting, based on the comparing, a hardware and/or software attribute (e.g., an operating or design parameter) for the real automated storage and retrieval system and/or real software stack. The selected attribute may then be implemented in the real automated storage and retrieval system and/or real software stack. For example, one or more hardware and/or software attributes may be selected if it is found that they improve performance of the system.

Optionally, the method may be performed during real-time operation of the real automated storage and retrieval system. For example, the order data may comprise real-time or live order data (such as real customer order data) which is received and processed by the virtual software stack at the same time as the real software stack of which the virtual software stack is a digital twin (e.g., software clone or virtual instance). Proposed changes to the real system may therefore be considered in real-time and assessed against the real-time performance of the real system in fulfilling customer orders.

Also provided herein is a computer-readable medium comprising instructions which, when executed by a processor of a device, cause the device to perform a computer-implemented method of simulating modifications to a real automated storage and retrieval system as described herein.

Also provided herein is a system comprising a real automated storage and retrieval system, and a data processing system comprising means for performing a computer-implemented method of simulating modifications to a real automated storage and retrieval system as described herein.

### Automated storage and retrieval system overview

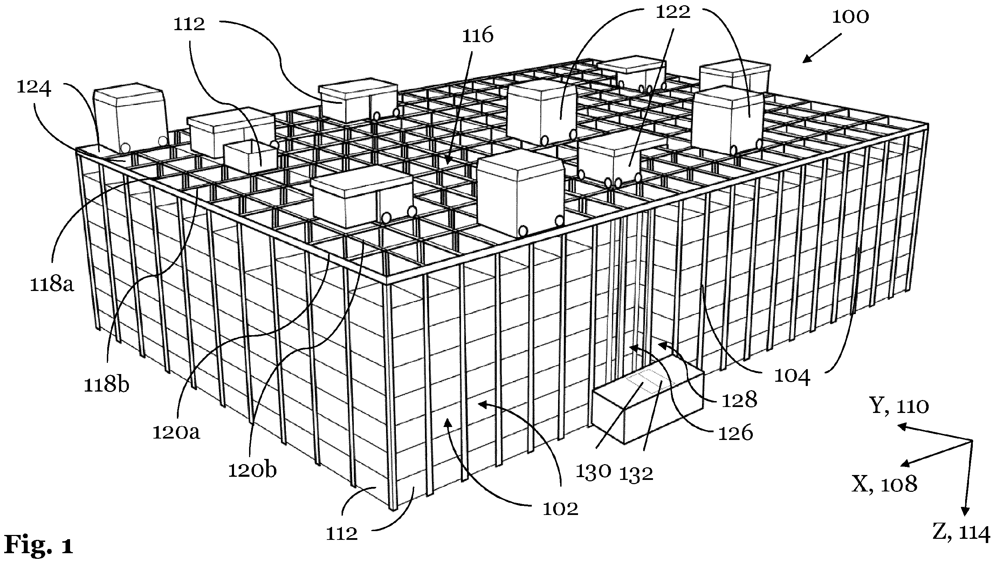

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

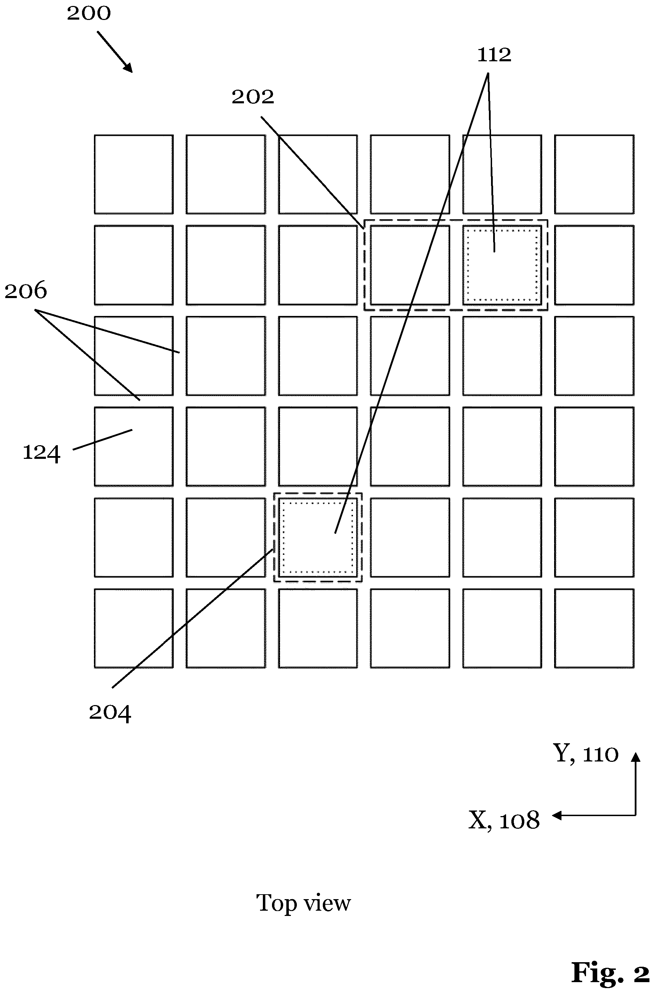

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

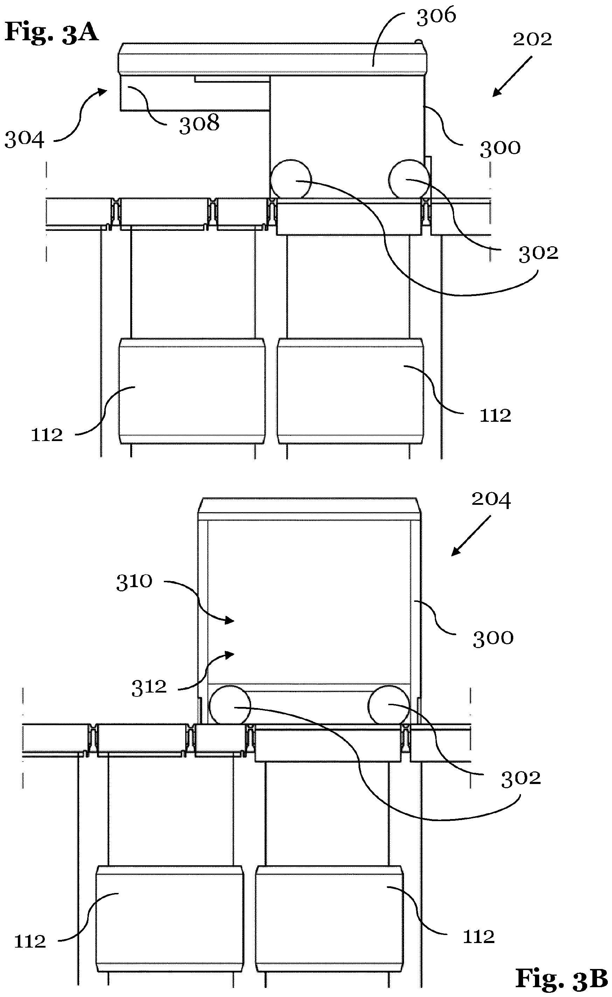

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

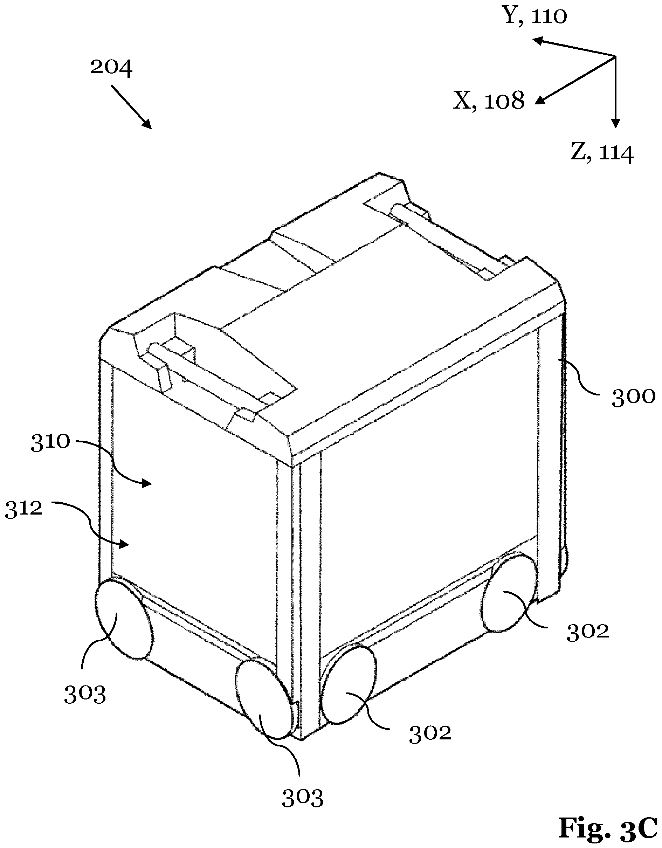

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

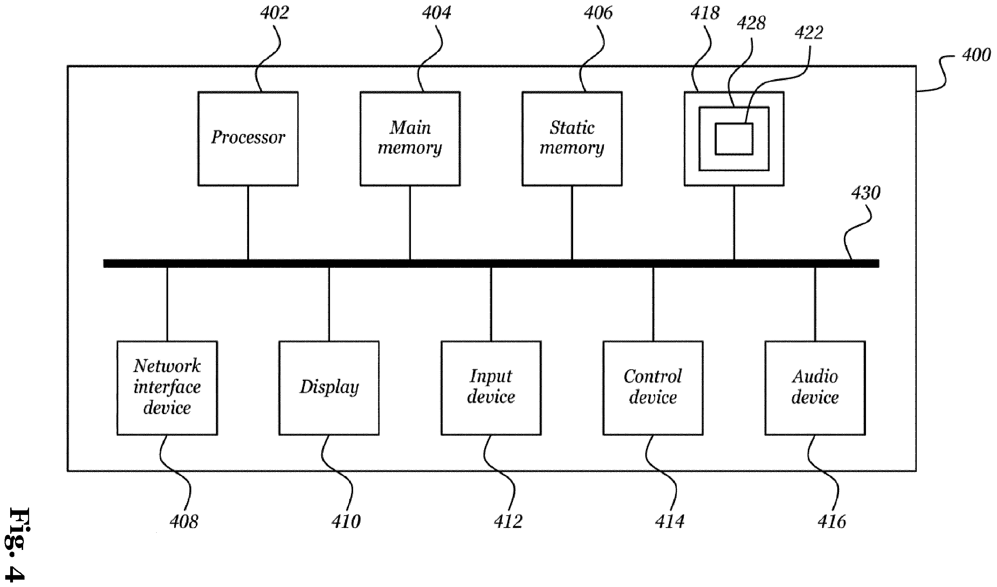

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Operating system overview

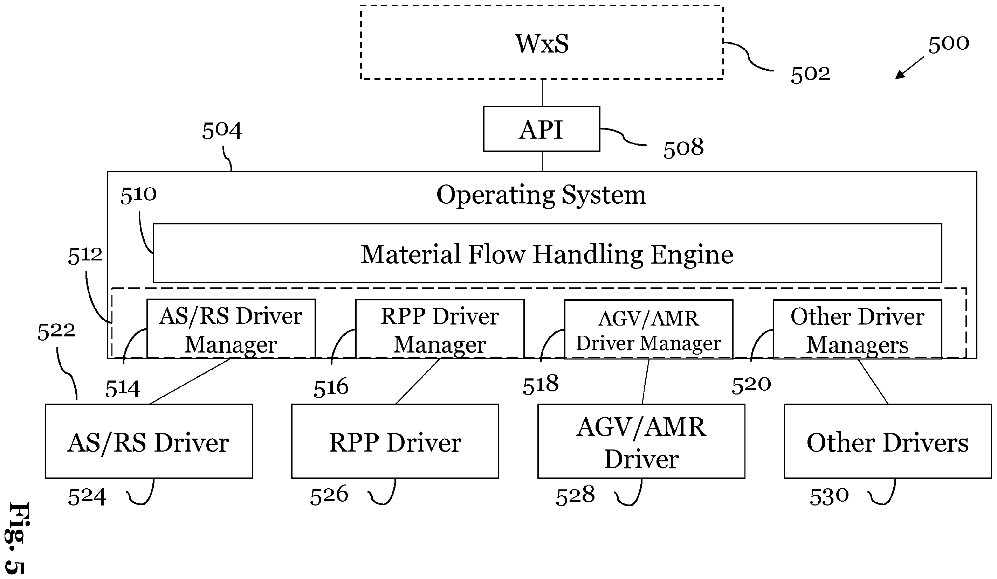

Fig. 5 is a schematic diagram of a software stack 500 showing the integration between a WxS 502, an operating system 504, and a plurality of device drivers 506 according to the present disclosure. The term "WxS" is intended to refer to one or more of: a Warehouse Management System, WMS; a Warehouse Execution System, WES; and a Warehouse Control System, WCS. The operating system 504 is a software layer (specific to the warehouse domain) that is implemented between the WxS 502 and the plurality of device drivers 506. The operating system 504 receives instructions from the WxS 502 in the form of order data, and provides instructions to the plurality of device drivers 506 to control an automated storage and retrieval system. It will be appreciated that this is merely one example of a software stack that may be used in implementations of the present disclosure, and other suitable software stacks may also be created. However, providing a software stack as shown in Fig. 5 allows a virtual software stack, as described in more detail below, to be easily modified.

### Integration with WxS

In a simple example, a warehouse may include an automated storage and retrieval system ("AS/RS"), but no adjacent hardware components. In this case, the material flow handling ("MFH") process is carried out using the AS/RS only. As shown in Fig. 5, the operating system 504 receives order data from the WxS 502 via an application programming interface (API) 508 (which may be, for example, an API of the operating system 504). The API 508 provides a constrained set of high-level abstractions for use by the WxS 502 in providing instructions to the operating system 504. In one example, the API 508 is implemented as a REST API. Specifically, the constrained set of abstractions provided by the API 508 is specific to the warehouse domain (i.e., does not include abstractions relating to out-of-warehouse processes), and includes higher level abstractions such as "order", "stock", "product" and "inventory", instead of lower level concepts specific to the AS/RS (e.g., "tasks", "task groups", "queues", etc.).

This means that the instructions received from the WxS 502 do not include specific instructions for hardware components of the AS/RS. For example, the instructions from the WxS 502 do not specify that a particular bin 112 is to be delivered to a particular port 130, 132. As another example, the instructions from the WxS 502 do not specify that a particular robot 202, 204 is to induct goods received at a particular port 130, 132. Instead, the operating system 504 identifies a plurality of tasks to be carried out in response to the high-level instructions received from the WxS 502.

For example, the WxS 502 shown in Fig. 5 may provide an order via the API 508 for 40 units of a particular item. The operating system 504 then converts the order into a number of tasks for the AS/RS to carry out. For example, the instructions received from the WxS 502 may simply be an order for a particular item (e.g., socks), rather than a specific instruction to deliver bin #329 (containing e.g., socks) to port #64 (e.g., as received from existing WMSs).

By implementing the operating system 504 and the API 508 with the constrained set of abstractions, the WxS 502 does not require in depth knowledge of the semantics of the AS/RS in order to process an order. Therefore, the integration of the WxS 502 and the AS/RS does not need to be hard coded into the WxS 502. In other words, the complexity of the underlying hardware is taken away from the WxS 502. Instead, the instructions received from the WxS 502 via the API 508 are translated by the operating system 504 into a plurality of tasks to be carried out within the warehouse.

### Device driver managers

As shown in Fig. 5, the operating system 504 includes a material flow handling ("MFH") engine 510, and one or more device driver managers 512. Continuing the simple example identified above, the one or more device driver managers 512 includes AS/RS driver manager 514. Each of the one or more device driver managers 512 manages one or more device drivers 522. Therefore, the AS/RS driver manager 514 interfaces with an AS/RS driver 524 that controls the AS/RS hardware (e.g., the ports 130, 132, robots 202, 204, etc.).

It can be seen from Fig. 5 that the operating system 504 includes a number of other device driver managers 512. Each of the other device driver managers 512 is specific to a particular class of hardware component operating adjacent to the AS/RS. As used herein, the term "adjacent" refers to hardware components that carry out material flow handling operations in conjunction with the AS/RS. For example, a RPP may pick one or more items out of a bin 112 at a port 130, 132 of an AS/RS. As another example, a conveyor, AGV or AMR may move a container or tote holding items picked from bins 112 of the AS/RS from a first location in the warehouse to a second location in the warehouse.

The device driver managers 512 that are implemented in the operating system 504 are dependent on the adjacent hardware components used in the warehouse. For example, the operating system 504 may include a robot piece picker (RPP) driver manager 516, an automated guided vehicle (AGV) or autonomous mobile robot (AMR) driver manager 518, and one or more other driver managers 520 (e.g., driver managers for other adjacent hardware components, such as conveyors, or machines for opening, closing or weighing containers or totes). One or more of these device driver managers 512 may not be implemented if fewer adjacent hardware components are used in the MFH process.

As mentioned above, each device driver manager 512 manages one or more device drivers 522. In the example shown in Fig. 5, the robot piece picker (RPP) driver manager 516 interfaces with one or more RPP drivers 526 that control respective RPPs operating adjacent to the AS/RS. The AGV/AMR driver manager 518 interfaces with one or more AGV/AMR drivers 528 that control respective AGVs and/or AMRs adjacent to the AS/RS. The other device driver managers 520 interface with other drivers 530 that control other hardware components (e.g., conveyors) adjacent to the AS/RS. The device drivers 522 may be executed on the same one or more computing devices as those that execute the operating system 504, but may be separate to the operating system 504 for security reasons. In one example, communication between the driver managers 512 and the respective device drivers 522 may be carried out using TCP/IP.

A device driver of a hardware component is typically a software program for controlling operation of the hardware component. The device driver is generally written by the OEM (i.e., the manufacturer of the hardware component). The device drivers 522 shown in Fig. 5 are dependent on the class of hardware that they are associated with. For example, the syntax and semantics for controlling operation of a RPP differ from the syntax and semantics for controlling operation of a conveyor. The hardware components operating adjacent to the AS/RS are generally produced by third-party manufacturers, which may be different to one another. For example, a RPP and an AGV may be produced by different third-party manufacturers and will have distinct device drivers.

Each of the device drivers 522 uses a different set of abstractions for interfacing with the operating system 504 (i.e., with their associated device driver manager 512). The set of abstractions used by each device driver 522 is dependent on the class of hardware component that the device driver 522 is associated with. For example, a device driver 526 for an RPP is associated with a particular class of hardware component (i.e., RPPs) and will therefore use a different set of abstractions to that used by a device driver 528 for an AGV or AMR, which is associated with a different class of hardware component (i.e., AGVs and AMRs). The set of abstractions used by the device drivers 522 is constrained and pre-specified (e.g., by the provider of the operating system 504). By using a constrained set of abstractions specified by the operating system 504, compatibility of each device driver 522 with the operating system 504 is ensured. In addition, the use of the constrained set of abstractions means that the need for detailed semantic knowledge of the hardware components themselves at the operating system 504 is eliminated.

### Simulating changes in a real automated storage and retrieval system

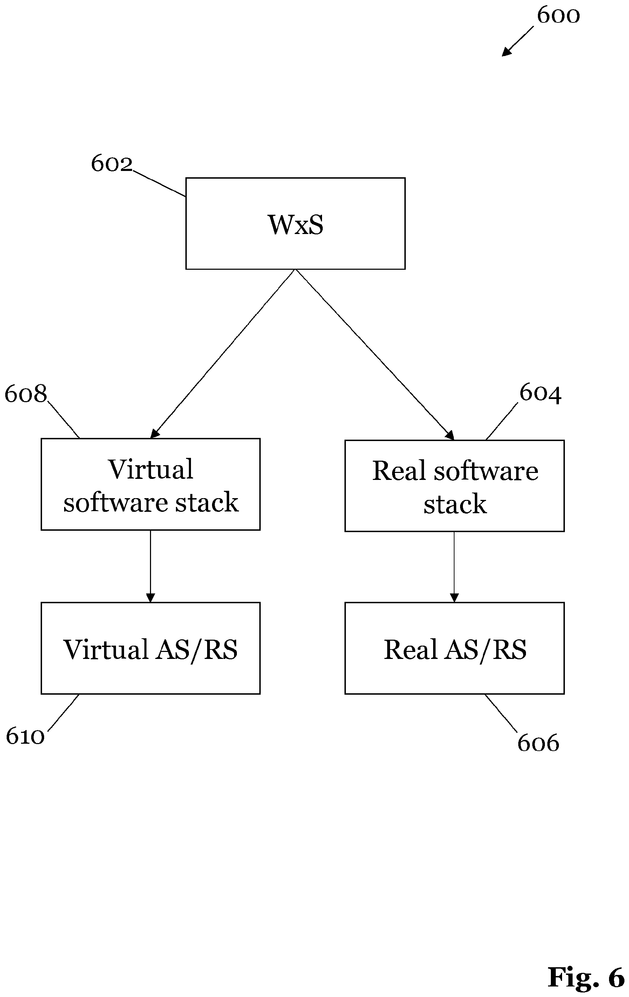

Fig 6 shows a schematic diagram of a system 600 which can be used to simulate modifications in an automated storage and retrieval system, with the aim of improving the automated storage and retrieval system. The system 600 is configured to carry out a method described in more detail below.

In general, the system 600 comprises a real portion and a virtual portion, wherein the virtual portion comprises a digital twin of the real portion. Modifications made to the virtual portion can therefore be assessed against the real portion to determine if those modifications effectively improve the real portion. In particular, modifications may be made to software and/or hardware.

The system 600 comprises a WxS 602, which is substantially the same as WxS 502 described above with respect to Fig. 5. The WxS 602 receives orders, and outputs order data. In this regard, the WxS 602 may be considered as a 'real' WxS (i.e., rather than a virtual WxS) as it is used to receive order data and provide data to the real portion of the system as described below as well as to the virtual portion.

The real portion of the system 600 comprises a real software stack 604 and a real automated storage and retrieval system 606, wherein the real automated storage and retrieval system 606 is controlled by the real software stack 604. The real automated storage and retrieval system 606 is a system which is installed in a warehouse, and which is executing orders under control of the real software stack 604. The real software stack 604 may be generally a software stack as described above with respect to Fig. 5, for example, and the real automated storage and retrieval system 606 may be a system as described above with respect to Fig. 1. However, the exact configuration of the real software stack 604 and the real automated storage and retrieval system 606 may vary according to requirements (e.g., according to the particular warehouse in which the real automated storage and retrieval system 606 is used, and the products which are stored therein).

The virtual portion of the system 600 comprises a virtual software stack 608 and a virtual automated storage and retrieval system 610, wherein the virtual automated storage and retrieval system 610 is controlled by the virtual software stack 608. In particular, the virtual automated storage and retrieval system 610 is a digital twin of the real automated storage and retrieval system 606, and so each component of the real automated storage and retrieval system 606 is replicated in software to create the virtual automated storage and retrieval system 610. Similarly, the virtual software stack 608 is a digital twin (that is, a software clone, or a virtual instance) of the real software stack 604. As the virtual portion of the system 600 is a digital twin of the real portion of the system, the virtual automated storage and retrieval system 610 should operate in an identical manner to the real automated storage and retrieval system 606 when the same order data is provided to each of the virtual software stack 608 and the real software stack 604. Information can be shared between the real portion and the virtual portion of the system 600 to ensure that the virtual software stack 608 and the virtual automated storage and retrieval system 610 operate as digital twins of their virtual counterparts, for example through calibration of the digital twin. The virtual software stack 608 and the virtual automated storage and retrieval system 610 may be operating on a computer system as described above with respect to Fig. 4, for example.

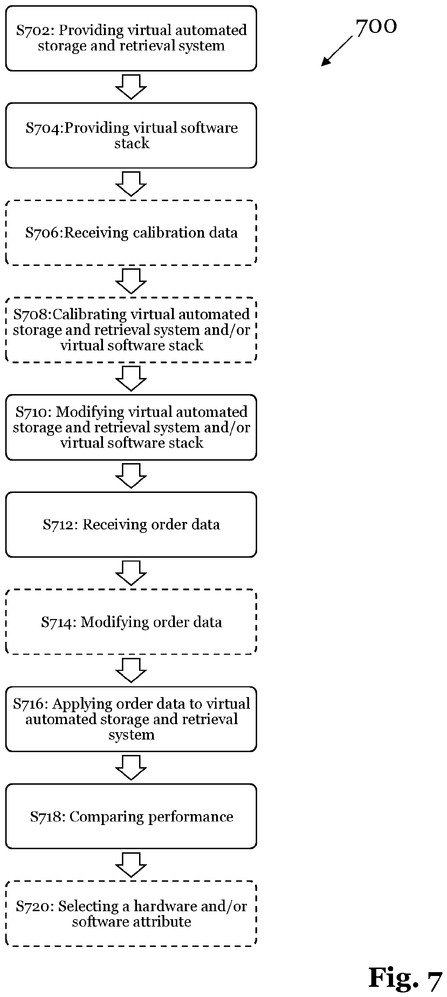

In order to test different modifications of hardware and/or software, the virtual software stack 608 and/or the virtual automated storage and retrieval system 610 may be modified, and the performance of the real automated storage and retrieval system 606 and the virtual automated storage and retrieval system 610 in response to a set of order data may be compared. A method of simulating modifications in this way is described below with respect to Fig. 7.

Although only one virtual software stack 608 and one virtual automated storage and retrieval system 610 are shown in Fig. 6, it will be appreciated that in other examples a plurality of virtual software stacks and a respective plurality of virtual automated storage and retrieval systems may be provided. For example, each virtual system may be modified differently (or one or more subsets of systems may be modified in a like manner) to test different modifications of hardware and/or software. The result of the modifications may be compared between the plurality of virtual systems, and/or compared with the real software stack 604 and real automated storage and retrieval system 606, for example.

Fig. 7 is a flow diagram showing a computer implemented method 700 of simulating modifications in a real automated storage and retrieval system according to an implementation of the present disclosure. For example, the method 700 may be performed by a computer system as described above with respect to Fig. 6, and may simulate modifications in an automated storage and retrieval system as described above with respect to Fig. 1. Although the steps of the method 700 are described below in a particular order, it will be appreciated that the steps may be performed in any suitable order, such that the description encompasses all suitable orders and should not be understood as being limited to the order in which the steps of the method 700 are described below. It will also be appreciated that one or more steps of the method 700 may be performed during real-time operation of a real automated storage and retrieval system, for example wherein a virtual system uses the same order data as is processed by the real system.

In a first step S702, the method 700 comprises providing a virtual automated storage and retrieval system, the virtual automated storage and retrieval system being a digital twin of a real automated storage and retrieval system. In some examples, step S702 may comprise providing a plurality of virtual automated storage and retrieval systems, with each of the plurality of virtual automated storage and retrieval systems being a digital twin of the same real automated storage and retrieval system. This may allow a plurality of modifications to be simulated simultaneously and compared with one another, and/or compared with the real automated storage and retrieval system.

In a second step S704, the method 700 comprises providing a virtual software stack for controlling the virtual automated storage and retrieval system, the virtual software stack being a digital twin (which may be understood as a clone, or a virtual instance) of a real software stack for controlling the real automated storage and retrieval system. In examples where a plurality of virtual automated storage and retrieval systems are provided, a corresponding plurality of virtual software stacks are provided, with each virtual software stack controlling a respective virtual automated storage and retrieval system.

Optionally, the method 700 may comprise a step S706 of receiving calibration data from the real automated storage and retrieval system and/or the real software stack. For example, calibration data may include a speed of vehicles across a rail system, locations of vehicles, locations or containers, or any other performance and/or operating parameter which may be determined and tracked by a real software stack and/or real storage and retrieval system. The calibration data may be used in a step S708 of calibrating the virtual automated storage and retrieval system and/or the virtual software stack, to ensure that the virtual automated storage and retrieval system is an accurate digital win of the real automated storage and retrieval system and the virtual software stack is an accurate digital twin (or software clone, or virtual instance) of the real software stack. In examples, the calibration data may be applied to any one or more of a plurality of virtual automated storage and retrieval systems and/or virtual software stacks.

At step S710, the method comprises modifying the virtual automated storage and retrieval system and/or the virtual software stack. In examples, step S710 may comprise modifying each of the plurality of simulated automated storage and retrieval systems and/or each of the respective virtual software stacks differently. The modification may be made to any suitable hardware and/or software attribute or feature of the virtual automated storage and retrieval system and/or virtual software stack. The modification may be determined by a user input for example, or may be determined based on a variable selected by a computer system or the like.

For example, modifying the virtual automated storage and retrieval system may comprise modifying virtual components of the virtual automated storage and retrieval system such as one or more virtual vehicles; one or more virtual storage containers; one or more virtual static mechanical handling system for moving one or more than one virtual storage container or virtual contents from a first location in the virtual automated storage and retrieval system to a second location in the virtual automated storage and retrieval system, one or more virtual picking and/or packing stations for adding and/or removing virtual contents from a virtual storage container; one or more virtual storage columns; and one or more virtual port columns. For example, the number, type, and/or placement of a given component may be modified, as well as any operating parameters of a component. In this step, the virtual automated storage and retrieval system may diverge from being a true digital twin of the real automated storage and retrieval system only by the modifications which are made, and other parameters may be kept the same in order to test those modifications against the performance of the real automated storage and retrieval system.

Modifying the virtual software stack may comprise comprises modifying logic controlling how commands to be executed by the virtual automated storage retrieval system are generated from order data, for example. It will be appreciated that any modifications may be made to the software stack as shown in Fig. 5, for example modifications to a material flow handling engine, modifications to a driver manager, modifications to a hardware driver etc. As another example, the virtual software stack may be modified so as to cause delays in delivering instructions to the virtual automated storage and retrieval system in order to assess how delays affect performance of the real system and so aid contingency planning, or instructions may be delivered to the virtual storage and retrieval system more quickly to assess how the system operates in periods of high order volume. In this step, the virtual software stack may diverge from being a true digital twin (or clone, or virtual instance) of the real software stack only by the modifications which are made, and all other parameters may be kept the same in order to test those modifications against the performance of the real automated storage and retrieval system.

At step S712 the method 700 comprises receiving, by the virtual software stack, order data. For example, order data may be received by the software stack by a WxS as described above (for example, via an API of the operating system of the software stack). It will be appreciated that the order data is real order data, and may be received in real time by the virtual software stack at the same time as the real software stack receives the order data. In this way, the virtual software stack and the virtual automated storage and retrieval system can provide a real-time digital twin of the real system, and modifications can also be made and tested in real-time, and assessed in real-time against the performance of the real system.

Optionally, the method 700 may comprise a step S714 of modifying the order data. For example, the rate at which order data is received by the virtual software stack may be modified to assess performance of the virtual software stack during periods of high or low order volume, and determine which software and/or hardware modifications are suitable during such periods. Order data may also be modified by removing some orders, or adding simulated orders, or in any other suitable manner, for example. Optionally, modifying the order data may comprise modifying a rate of applying order data to the virtual automated storage and retrieval system.

At step S716, the method comprises applying order data to the virtual automated storage and retrieval system. In step S716, the virtual software stack may covert the order data into a number of tasks for the virtual automated storage and retrieval system to carry out. For example, this may comprise passing the order data through a material flow handling engine and one or more device driver managers in order to provide instructions to the components of the virtual automated storage and retrieval system in a manner as described above with respect to Fig. 5. For example, if a plurality of virtual software stacks are provided, they may each be modified so that the logic by which order data is converted into instructions to be carried out by a respect virtual automated storage and retrieval system differs between each virtual software stack, and so operations carried out by each of the virtual automated storage and retrieval systems may also differ as a result.

At step S718, the method 700 comprises comparing performance of the real automated storage and retrieval system with performance of the virtual automated storage and retrieval system based on responses of the real automated storage and retrieval system and the virtual automated storage and retrieval system to the order data. For example, the modifications made to the virtual software stack and/or to the virtual automated storage and retrieval system may lead to differences in the number of orders which are fulfilled by the virtual automated storage and retrieval system compared to the real automated storage and retrieval system, or differences in any other measurable parameter, such as an order backlog, utilization of the available storage space, and/or an energy consumption of the automated storage and retrieval system.

Optionally, the method 700 may also include a step S720 of selecting, based on the comparison at step S718, a hardware and/or software attribute for the real automated storage and retrieval system and/or real software stack. For example, selecting an attribute may comprise selecting the attribute which maximally improves one or more parameters compared at step S718. If the attribute is a software attribute, then this may be provided to the real system as a software update or patch at any suitable time. In particular, in examples where the method 700 is performed during real-time operation of the real system, updates can also be made to the system in real-time.

### Penultimate comments

A variant of a computer-implemented method of simulating modifications to a real automated storage and retrieval system may comprise: providing a plurality of virtual automated storage and retrieval systems, each virtual automated storage and retrieval system being a digital twin of a real automated storage and retrieval system; providing a plurality of virtual software stacks, each for controlling a respective virtual automated storage and retrieval system, and each virtual software stack being a digital twin (e.g., a software clone or a virtual instance) of a real software stack for controlling the real automated storage and retrieval system; modifying one or more of the plurality of virtual automated storage and retrieval systems and/or one or more of the virtual software stacks; receiving, by the plurality of virtual software stacks, order data; applying, by each virtual software stack, the order data to the respective virtual automated storage and retrieval system; and comparing performance of the plurality of virtual automated storage and retrieval systems to one another based on responses of the plurality of virtual automated storage and retrieval systems to the order data. For example, the performance of an automated storage and retrieval system may be based on order fulfilment times, an order backlog, a number of orders which are completed in a given time period, or any other suitable measurable parameter (such as power consumption). The method thereby allows modifications to a real system (including hardware and/or software components of the system) to be simulated based on real order data, and assessed relative to another virtual system (which may have had no modifications, or may have had one or more different modifications). If the modifications result in a positive improvement, then these changes may be implemented in the real system.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method of simulating modifications to a real automated storage and retrieval system, the method comprising:
providing a virtual automated storage and retrieval system, the virtual automated storage and retrieval system being a digital twin of a real automated storage and retrieval system;
providing a virtual software stack for controlling the virtual automated storage and retrieval system, the virtual software stack being a digital twin of a real software stack for controlling the real automated storage and retrieval system;
modifying the virtual automated storage and retrieval system and/or the virtual software stack;
receiving, by the virtual software stack, order data;
applying, by the virtual software stack, the order data to the virtual automated storage and retrieval system; and
comparing performance of the real automated storage and retrieval system with performance of the virtual automated storage and retrieval system based on responses of the real automated storage and retrieval system and the virtual automated storage and retrieval system to the order data.

2. The computer-implemented method of claim 1 wherein modifying the virtual automated storage and retrieval system comprises modifying virtual components of the virtual automated storage and retrieval system.

3. The computer-implemented method of claim 2, wherein the virtual components comprise any one or more of:
a virtual vehicle;
a virtual storage container;
a virtual static mechanical handling system for moving one or more than one virtual storage container or virtual contents from a first location in the virtual automated storage and retrieval system to a second location in the virtual automated storage and retrieval system;
a virtual picking and/or packing station for adding and/or removing virtual contents from a virtual storage container;
a virtual storage column; and
a virtual port column.

4. The computer-implemented method of any preceding claim, wherein modifying the virtual software stack comprises modifying logic controlling how commands to be executed by the virtual automated storage and retrieval system are generated from order data.

5. The computer-implemented method of any preceding claim, further comprising a step of modifying the order data.

6. The computer-implemented method of claim 5, wherein modifying the order data comprises modifying a rate of applying order data to the simulated automated storage and retrieval system

7. The computer-implemented method of any preceding claim, further comprising a step of calibrating the virtual automated storage and retrieval system and/or the virtual software stack.

8. The computer-implemented method of claim 7, further comprising a step of receiving calibration data from the real automated storage and retrieval system and/or the real software stack.

9. The computer-implemented method of claim 8, wherein the calibration data comprises tracking data relating to movement of containers and vehicles about the real automated storage and retrieval system.

10. The computer-implemented method of any preceding claim, wherein:
providing a virtual automated storage and retrieval system comprises providing a plurality of virtual automated storage and retrieval systems, each virtual automated storage and retrieval system being a digital twin of the same real automated storage and retrieval system,
providing a virtual software stack for controlling the virtual automated storage and retrieval system comprises providing a respective virtual software stack for each of the plurality of virtual automated storage and retrieval systems,
modifying the simulated automated storage and retrieval system comprises modifying each of the plurality of simulated automated storage and retrieval systems and/or each of the respective virtual software stacks differently, and
comparing performance of the real automated storage and retrieval system with performance of the modified simulated automated storage and retrieval system comprises comparing the performance of each of the plurality of automated storage and retrieval systems with each other.

11. The computer-implemented method of any preceding claim, further comprising, selecting, based on the comparing, a hardware and/or software attribute for the real automated storage and retrieval system and/or real software stack.

12. The computer-implemented method of any preceding claim, wherein the method is performed during real-time operation of the real automated storage and retrieval system.

13. A computer-readable medium comprising instructions which, when executed by a processor of a device, cause the device to perform the method of any of claims 1 to 12.

14. A system comprising:
a real automated storage and retrieval system, and
a data processing system comprising means for performing the method of any one of claims 1 to 12.
